# EUROPEAN PATENT APPLICATION

(11) **EP 4 454 498 A1**
(43) Date of publication of application: **30.10.2024**
(21) Application number: 24171160.5
(22) Date of filing: 18.04.2024
(51) Int. Cl.: A24F 40/40, A24F 40/30, A24F 40/10

(54) **A DETACHABLE MULTI-FLAVOR ELECTRONIC CIGARETTE**

(30) Priority: 19.04.2023 CN 202310420725
(71) Applicant: Happy Vibes International Corporation Limited, Kowloon (HK)
(72) Inventor: Guo Xiaowen, Kowloon, Hong Kong (HK); Jiang Yang, Kowloon, Hong Kong (HK)
(74) Representative: Bateman, Samuel Alec

(57) **Abstract**

A detachable multi-flavor electronic cigarette. It includes a mouthpiece, an upper oil compartment, a battery compartment, and a cartridge body. The mouthpiece is connected to the upper oil compartment, which is connected to the battery compartment from below, and the cartridge body is installed inside the upper oil compartment. The side of the bottom of the upper oil compartment is equipped with an upper magnetic suction contact, and the center of the bottom is provided with a center positioning groove. The side of the top of the battery compartment is equipped with a lower magnetic suction protrusion, and the center of the top is provided with a center positioning block. The utility model has the beneficial effect that the electronic cigarette has multiple cartridges, which can provide more flavors for users to choose from, thus improving the user experience. When the battery power is insufficient, the user can quickly separate the battery compartment and the oil compartment for easy replacement of the battery compartment. The oil compartment and the battery compartment are connected by magnetic suction, which ensures fast separation and installation.

## Description

### Technical field

The utility model relates to an electronic cigarette, in particular to an electronic cigarette suitable for multi-flavor or multi-oil bins.

### Technical background

E-cigarette is an electronic product that imitates cigarettes with the same appearance, smoke, taste and feeling as cigarettes.

The existing patented technology 202122396453.9 includes an oil tank and an atomization component. The oil tank comprises a housing, a smoke channel, and a sealing film. The housing has an oil chamber, and the smoke channel is set inside the housing and protrudes from the housing. The sealing film is set on the opening of the oil chamber. The atomization component comprises an atomization base, an atomization cotton, and a piercing tube. The atomization base has an atomization oil groove and a smoke hole, and the smoke hole is connected to the atomization oil groove. The atomization cotton is placed inside the atomization base and is located between the smoke hole and the atomization oil groove. The piercing tube is set inside the atomization base and protrudes from the atomization base. The piercing tube has a guide oil groove near one end close to the atomization oil groove, and the guide oil groove is connected to the atomization oil groove. In this way, the oil tank and the atomization component can be separated and transported independently, which can avoid oil spillage and blockage of the atomization cotton, effectively ensuring the service life of the atomizer.

However, the oil tank of the battery compartment of current technology still cannot be separated. When the device runs out of power, users cannot quickly replace the battery, which prevents them from using the device. In addition, the oil tank of the device is relatively simple and cannot provide multiple flavors, which cannot effectively enhance the user experience.

### Content of utility model

The purpose of this utility model is to provide a detachable multi-flavored electronic cigarette to address the shortcomings and defects of the existing technology. The electronic cigarette has multiple smoke cartridges, which can provide more flavors for users to choose from to enhance their experience. Additionally, when the battery power is low, users can quickly separate the battery compartment from the oil compartment to replace the battery, making it convenient for users to use. The oil compartment and battery compartment are connected by a magnetic suction method, ensuring quick and easy separation and installation.

To achieve the above objectives, the present utility model proposes a separable multi-flavored electronic cigarette. The electronic cigarette includes a mouthpiece 1, an upper oil storage tank 2, a battery compartment 3, and a cartridge body 7. The mouthpiece 1 is snapped onto the upper part of the upper oil storage tank 2, which is connected to the battery compartment 3 at the bottom. The cartridge body 7 is installed inside the upper oil storage tank 2. The side of the bottom of the upper oil storage tank 2 is installed with an upper magnetic contact point 27, and the middle part of the bottom of the upper oil storage tank 2 is equipped with a middle positioning groove 28. The side of the top of the battery compartment 3 is installed with a lower magnetic suction protrusion 33, and the middle part of the top of the battery compartment 3 is equipped with a middle positioning protrusion 32. The upper magnetic contact point 27 and the lower magnetic suction protrusion 33 are magnetically attracted to each other, and the middle positioning protrusion 32 and the middle positioning groove 28 are mutually matched. This design allows users to quickly replace the battery compartment when the battery is low, and the magnetic suction connection ensures quick and easy separation and installation of the oil storage tank and battery compartment.

Further, the number of the upper magnetic contact points 27 is equal to the number of the lower magnetic protruding points 33, and both are equipped with several.

Further, the smoke cartridge body 7 is equipped with at least two and all are installed inside the upper oil tank body 2.

Further, the mouthpiece 1 includes a connecting cover body 11, which is snapped onto the top of the upper oil tank body 2. The connecting cover body 11 is equipped with a mouthpiece 13, and the mouthpiece 13 has a mist outlet 12. The connecting cover body 11 is also equipped with an indicator line 14.

Further, the upper oil tank body 2 also includes a positioning buckle 21, a cartridge cover plate 22, a connecting protrusion 23, an upper shell body 24, an anti-slip protrusion 25, a lower shell body 26, and an oil tank air inlet 29. The positioning buckle 21 is located on the side of the top of the upper shell body 24. The upper shell body 24 has a connecting protrusion 23 at the top, and the cartridge cover plate 22 is installed on the top of the upper shell body 24. The upper shell body 24 is connected to the lower shell body 26 through the anti-slip protrusion 25. The lower shell body 26 has an oil tank air inlet 29. The cartridge body 7 is installed within the inner wall of the upper shell body 24 and the lower shell body 26, and the top of the cartridge body 7 is connected to its cartridge cover plate 22.

Further, the battery compartment 3 also includes a lower electrode point 31, an insulating ring 34, and an air outlet 35. The insulating ring 34 is installed at the top of the battery compartment 3, and the insulating ring 34 has a lower electrode point 31 and an air outlet 35 within it.

Further, the upper end of said smoke bomb body 7 is provided with an exhaust hole 7-1 for exhaust operation, and the smoke bomb body 7 is provided with an outlet nozzle 7-2 for easy smoke discharge and an upper electrode point 7-3 connected with the lower electrode point 31 to cooperate.

Further, the battery compartment 3 is provided with output position indication 4 on the side, and the battery compartment 3 is provided with charging port 5 and air inlet 6 at the bottom.

After using the above technical solutions, the utility model beneficial effect is: this electronic cigarette has multiple smoke, can provide more flavors, so that its users in use, according to the need to choose different flavors for sucking, so that users can have a better experience, and in the battery power is low, the user can quickly separate its battery compartment and oil compartment, so as to replace the battery compartment, convenient for users to use, and the oil compartment and The battery compartment and the oil compartment are connected by magnetic suction, which can ensure its separation and installation speed.

### Brief description of drawings

Aiming to explain the embodiments of the utility model or the technical scheme in the prior art more clearly, the drawings needed in the description of the embodiments or the prior art will be briefly introduced below. Obviously, the drawings in the following description are only some embodiments of the utility model. For ordinary technicians in the field, other drawings can be obtained according to these drawings without paying creative labor.
Fig. 1 is the structural schematic diagram of the utility model.
Fig. 2 is a schematic view of the utility model from the second angle.
Fig. 3 is a schematic diagram of the exploded state based on fig. 1.
Fig. 4 is a schematic diagram of the structure of the suction nozzle 1 in the utility model.
Fig. 5 is a schematic diagram of the structure of the upper oil compartment 2 in the utility model.
Fig. 6 is a schematic diagram of the structure of the bottom corresponding to Fig. 5.
Fig. 7 is a schematic diagram of the structure of the cigarette shell body 7 in the utility model.
Fig. 8 is a schematic diagram of the structure of the battery compartment 3 in the utility model.

Description of the attached markings: nozzle 1, upper oil compartment body 2, battery compartment 3, output position indication 4, charging port 5, air inlet 6, smoke bomb body 7, connecting cover body 11, fog outlet hole 12, nozzle body 13, indication line 14, positioning snap 21, smoke bomb cover 22, connecting bump 23, upper housing 24, anti-slip bump 25, lower housing 26, upper magnetic suction contact 27, central positioning recess 28, oil compartment air inlet hole 29, lower electrode point 31, central positioning bump 32, lower magnetic suction bump 33, insulating ring 34, air outlet hole 35, exhaust hole 7-1, fog outlet nozzle 7-2, upper electrode point 7-3.

### Detailed implementation mode

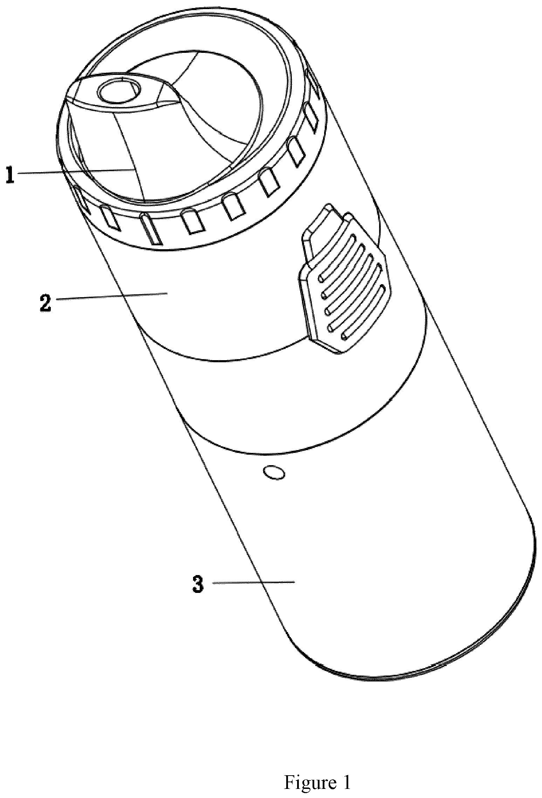

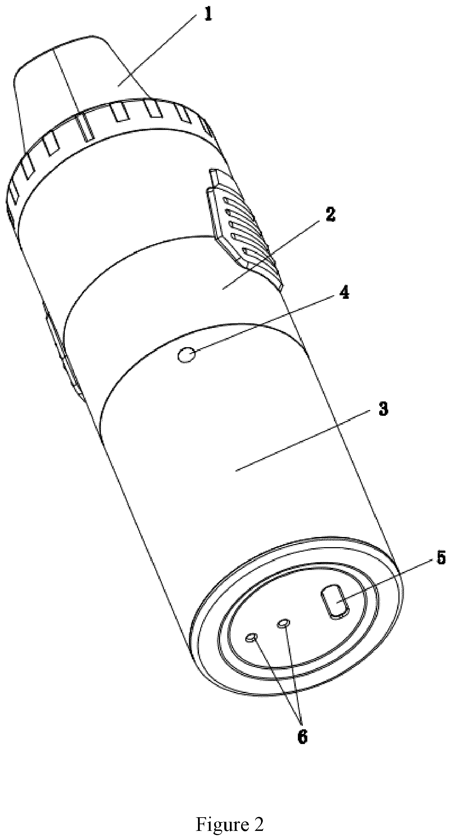

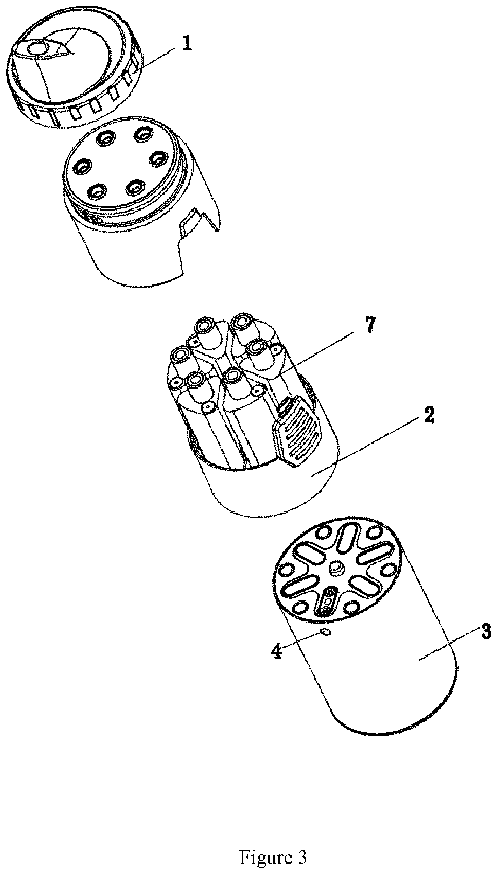

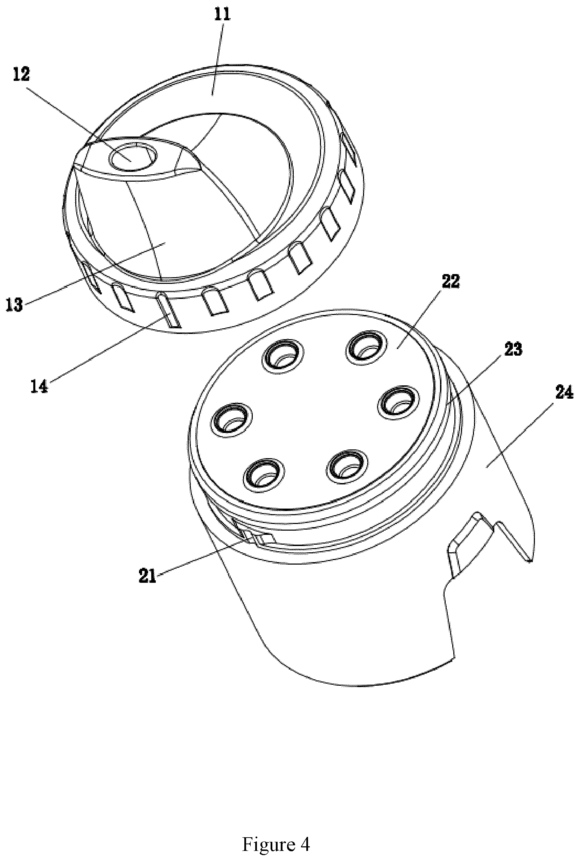

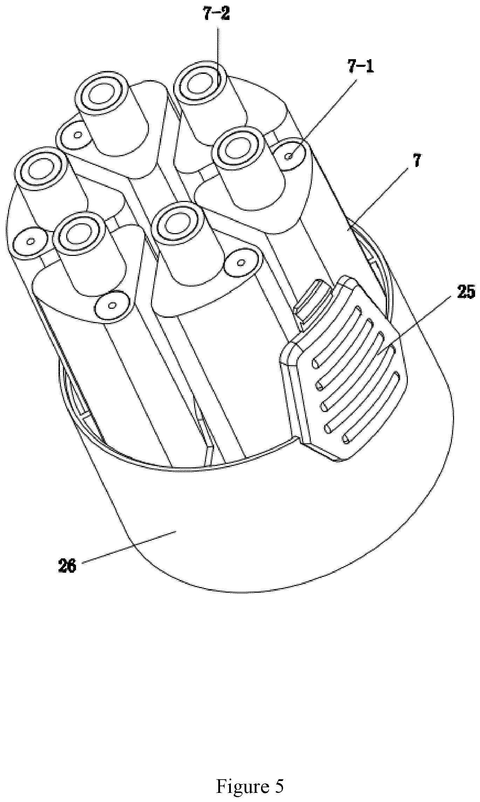

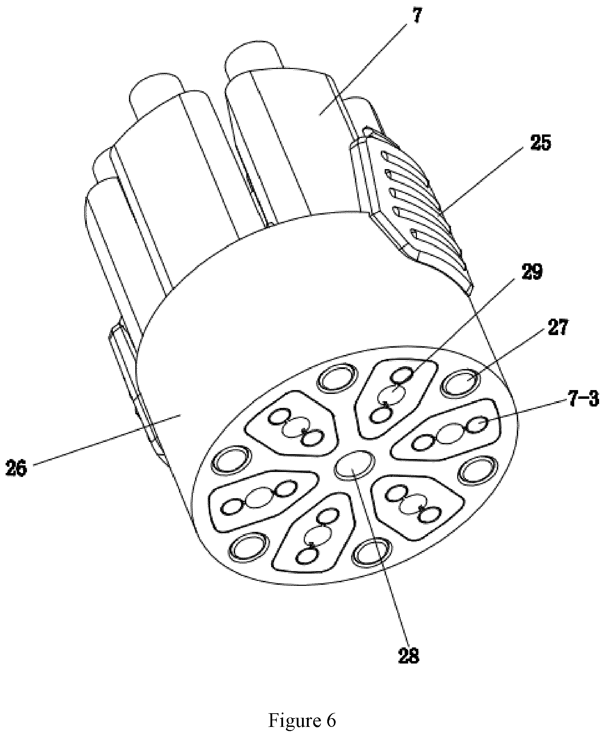

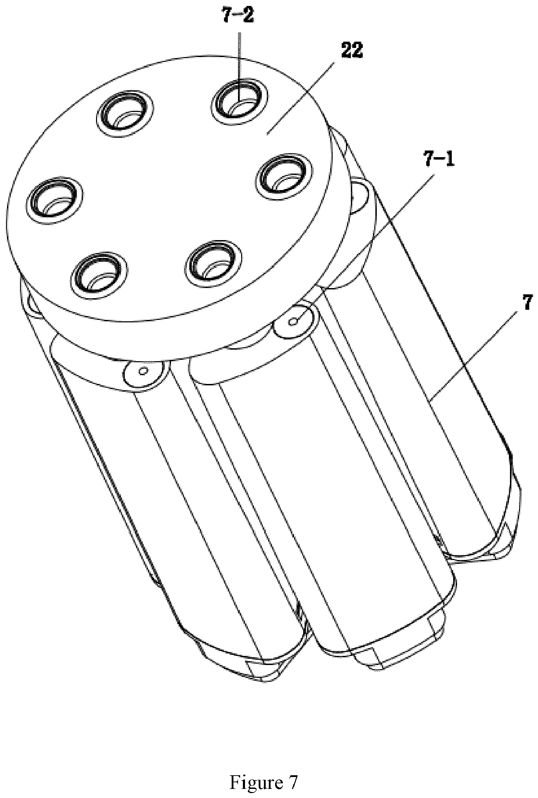

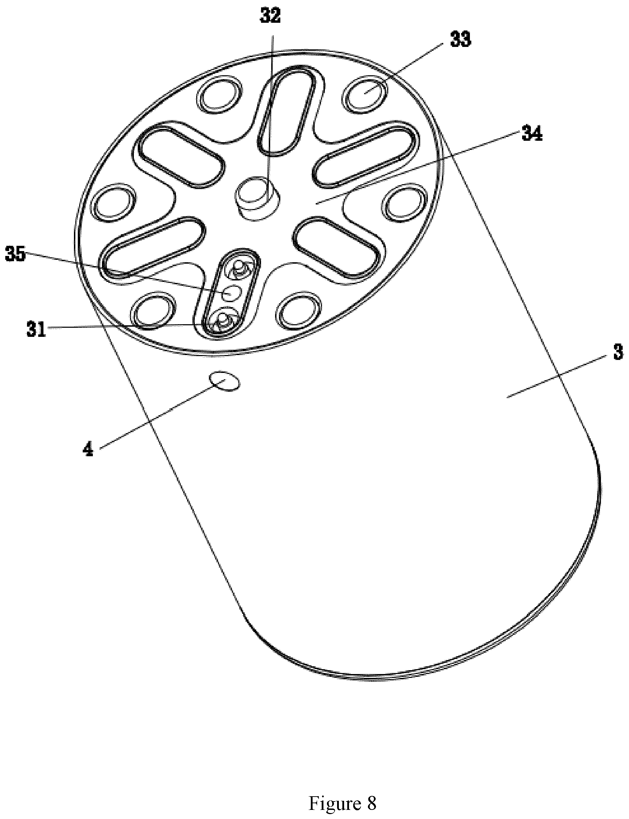

Referring to fig. 1- fig. 8, the technical scheme adopted in this embodiment is as follows: It includes a suction nozzle 1, an upper oil compartment 2, a battery compartment 3, and a smoke cartridge 7, the suction nozzle 1 is attached to the upper oil compartment 2, the lower part of the upper oil compartment 2 is interconnected with the battery compartment 3, and the smoke cartridge 7 is installed in the upper oil compartment 2, the upper magnetic suction contact 27 is installed on the side of the bottom of the upper oil compartment 2, and the middle of the bottom of the upper oil compartment 2 is provided with a central positioning groove 28, the top side of the battery compartment 3 is installed with a lower magnetic suction The top side of the battery compartment 3 has a lower magnetic suction bump 33, and the middle of the top of the battery compartment 3 has a central positioning bump 32, the upper magnetic suction contact 27 and the lower magnetic suction bump 33 are magnetically compatible with each other, and the central positioning bump 32 and the central positioning groove 28 are compatible with each other.

More specifically, the number of upper magnetic contacts 27 and the number of lower magnetic bumps 33 are equal, and both are provided with a number of them, and the plurality of upper magnetic contacts 27 and lower magnetic bumps 33 can enhance the stability of the connection between the upper oil compartment 2 and the battery compartment 3.

More specifically, the smoke bomb body 7 is provided with at least two, and both are provided in the upper oil compartment body 2. A plurality of smoke cartridges 7 can provide more flavors and increase the user's experience.

More specifically, the suction nozzle 1 includes a connection cover 11, which is attached to the top of the upper oil chamber 2, and the connection cover 11 is provided with a suction nozzle 13, and the suction nozzle 13 is provided with a fog hole 12, and the connection cover 11 is provided with an indication line 14. The connection cover 11 ensures the stability of the connection between the nozzle 1 and the upper oil compartment 2, while the indication line 14 allows the user to understand the current indication position and, with its output position indication 4, to quickly connect the current position of the lower electrode point 31.

More specifically, the upper oil compartment body 2 also includes a positioning snap 21, a smoke bomb cover 22, a connecting bump 23, an upper housing 24, a non-slip bump 25, a lower housing 26, and an oil compartment air inlet hole 29, the positioning snap 21 is set on the side of the top of the upper housing 24, and the top of the upper housing 24 is provided with a connecting bump 23, the smoke bomb cover 22 is mounted on the top of the upper housing 24, the bottom of the upper housing 24 is connected to the lower housing 26 by a non-slip bump 25, the lower housing 26 is provided with an oil compartment air inlet hole 29, the smoke bomb body 7 is set on the inner wall of the upper housing 24 and the lower housing 26, and the top of the smoke bomb body 7 is connected with a smoke bomb hole 29. The upper housing 24 is connected to the lower housing 26 by a non-slip tab 25, the lower housing 26 is provided with an oil chamber air inlet hole 29, the smoke bomb body 7 is set on the inner wall of the upper housing 24 and the lower housing 26, and the top of the smoke bomb body 7 is connected to the smoke bomb cover 22. 21 can ensure that the nozzle 1 and the upper oil bin 2 connection position, where the anti-slip bump 25 can not only ensure the upper shell 24 and the lower shell 26 connection stability, and can facilitate the user to use, better grasp the device.

More specifically, the battery compartment 3 also includes a lower electrode point 31, an insulating ring 34 and an air outlet 35, the insulating ring 34 is mounted on the top of the battery compartment 3, and the insulating ring 34 is provided with a lower electrode point 31 and an air outlet 35. the insulating ring 34 can ensure that the battery compartment 3 and the vape body 7 do not accidentally touch, and the lower electrode point 31 can power the vape body 7 through the upper electrode point 7-3.

More specifically, the upper end of the smoke bomb body 7 is provided with an exhaust hole 7-1 for exhaust operation, and the smoke bomb body 7 is provided with a fog nozzle 7-2 and an upper electrode point 7-3 connected with the lower electrode point 31 to facilitate smoke emission.

More specifically, the side of the battery compartment 3 is provided with an output position indication 4, and the bottom of the battery compartment 3 is provided with a charging port 5 and an air inlet 6. The output position indication 4, together with its indication line 14, facilitates the user to locate the position of the lower electrode point 31, while the air inlet 6 makes it easy for the user to enter the air when sucking, and when the device is low on power, the user can charge the device through the air inlet 5.

The working principle of this utility model: when the user needs to use, the user only needs to suck its mouthpiece 13, at this time, the electronic cigarette internal microphone will quickly respond, so that its lower electrode point 31 for its upper electrode point 7-3 for power supply operations, so that its current bullet body 7 atomization operations, the outside air will be through the air inlet 6, air outlet 35 and oil bin air inlet hole 29 to reach the bullet body 7, so that When the user needs to switch different flavors, the user only needs to rotate the upper oil compartment body 2 and battery compartment 3, so that the lower electrode point 31 and the upper electrode point 7-3 on the different bullet body 7 can cooperate to complete the flavor switching, when rotating, the upper magnetic suction contact 27 and the lower magnetic suction bump 33 In the rotation, the upper magnetic contact 27 and the lower magnetic contact 33 can cooperate with each other to ensure the connectivity of the upper oil compartment 2 and the battery compartment 3, while the central positioning groove 28 and the central positioning bump 32 can ensure the rotation of the upper oil compartment 2 and the battery compartment 3, and when it is necessary to replace the different smoke cartridges 7, the user can remove the upper housing 24 and the lower housing 26 to replace the new smoke cartridges 7, in which, when the battery compartment 3 is low on electricity, the user can When the battery compartment 3 is low, the user can remove the battery compartment 3 and use the charging port 5 for charging.

The above is only used to illustrate the technical scheme of this utility model, not to limit it. Other modifications or equivalent substitutions made by ordinary technicians in this field should be included in the scope of the claims of this utility model as long as they do not deviate from the spirit and scope of the technical scheme of this utility model.

## Claims

1. A detachable multi-flavor electronic cigarette, comprising a mouthpiece (1), an upper oil tank (2), a battery compartment (3), and a smoke cartridge (7), wherein the mouthpiece (1) is connected to the upper oil tank (2) and the lower part of the upper oil tank (2) is connected to the battery compartment (3); the upper oil tank (2) contains the smoke cartridge (7); the side of the bottom of the upper oil tank (2) is installed with an upper magnetic suction contact point (27); the side of the top of the battery compartment (3) is installed with a lower magnetic contact (33); and wherein the upper magnetic suction contact point (27) and the lower magnetic contact (33) are magnetically attracted to each other.

2. A separable multi-cartridge electronic cigarette according to any preceding claim, **characterized in that** the number of upper magnetic suction points (27) is equal to the number of lower magnetic contacts (33), and both are provided with several.

3. A separable multi-cartridge electronic cigarette according to any preceding claim, **characterized in that** the cartridge body (7) is provided with at least two cartridges, all of which are located inside the upper oil storage chamber (2).

4. A separable multi-cartridge electronic cigarette according to any preceding claim, **characterized in that** the mouthpiece (1) comprises a connection cover body (11), which is snapped onto the top of the upper oil storage chamber (2). The connection cover body (11) is provided with a mouthpiece body (13), which has a mist outlet (12) and an indicator line (14) on the connection cover body (11).

5. A separable, multi-cartridge electronic cigarette as claimed in any preceding claim, **characterized in that** the upper oil chamber (2) further comprises a locating buckle (21), a cartridge cover (22), a connecting projection (23), an upper shell (24), anti-slip projections (25), a lower shell (26), and an oil chamber air inlet (29). The locating buckle (21) is set on the side of the top of the upper shell (24), and the upper shell (24) has a connecting projection (23) on the top. The cartridge cover (22) is installed on the top of the upper shell (24), and the upper shell (24) is connected to the lower shell (26) through anti-slip projections (25) below. The lower shell (26) has an oil chamber air inlet (29) on top. The cartridge body (7) is set on the inner wall of the upper shell (24) and the lower shell (26), and the top of the cartridge body (7) is connected to its cartridge cover (22).

6. A separable multi-cartridge electronic cigarette as claimed in any preceding claim, **characterized in that** the battery compartment (3) further comprises a lower electrode point (31), an insulating ring (34) and an air outlet (35), the insulating ring (34) being installed at the top of the battery compartment (3), and the insulating ring (34) having a lower electrode point (31) and an air outlet (35) inside.

7. A separable multi-cartridge electronic cigarette as claimed in any preceding claim, **characterized in that** the cartridge body (7) has an exhaust hole (7-1) at the top for exhaust operation, and is provided with a mist outlet (7-2) for easy smoke discharge, and an upper electrode point (7-3) connected to the lower electrode point (31) for coordination.

8. A detachable multi-cartridge electronic cigarette according to any preceding claim, **characterized in that** the battery compartment (3) is equipped with an output position indicator (4) on the side, and the bottom of the battery compartment (3) is provided with a charging port (5) and an air inlet (6).

9. A detachable multi-cartridge electronic cigarette according to any preceding claim, wherein the middle of the bottom of the upper oil tank (2) is equipped with a middle positioning groove (28) and the middle of the top of the battery compartment (3) is equipped with a middle positioning protrusion (32), and the middle positioning protrusion (32) and the middle positioning groove (28) are mutually matched.

10. A detachable multi-cartridge electronic cigarette according to any preceding claim, wherein the lower magnetic contact (33) is a lower magnetic suction protrusion.

11. A detachable multi-flavor electronic cigarette, comprising a mouthpiece (1), an upper oil tank (2) configured to hold a plurality of smoke cartridges (7), and a battery compartment (3), wherein the mouthpiece (1) is connected to the upper oil tank (2) and the lower part of the upper oil tank (2) is connected to the battery compartment (3); the bottom of the upper oil tank (2) is installed with an upper magnetic suction contact point (27); top of the battery compartment (3) is installed with a lower magnetic contact (33); and wherein the upper magnetic suction contact point (27) and the lower magnetic contact (33) are magnetically attracted to each other.
